# EUROPEAN PATENT APPLICATION

(11) **EP 0 997 822 A2**
(43) Date of publication of application: **03.05.2000**
(21) Application number: 99121507.0
(22) Date of filing: 28.10.1999
(51) Int. Cl.: G06F 13/28

(54) **DMA control method and apparatus**

(30) Priority: 28.10.1998 JP 30656298
(71) Applicant: NEC CORPORATION, Tokyo (JP)
(72) Inventor: Daito, Masayuki, Minato-ku, Tokyo (JP)
(74) Representative: Betten & Resch

(57) **Abstract**

In a DMA control apparatus which is connected to a bus system for transferring a lowest digit address from an even address when a data is transferred on a bus having a plurality of byte bus widths using a bus width of more than or equal to two bytes, the apparatus has transfer size determining means 14 for, every data transfer, obtaining optimum transfer byte size which is a bus width during a data transfer on a bus, based on address regions and transfer byte numbers of a transfer source and a transfer destination.

## Description

### BACKGROUND OF THE INVENTION

The present invention relates to a DMA control apparatus for conducting a DMA transfer, and especially to a DMA control apparatus provided with a function for automatically changing transfer size.

Conventionally, in order to conduct a data transfer of opposite memories directly between both memories for example, a DMA (Direct Memory Access) transfer method for conducting a data transfer directly between transfer parties without passing through a CPU is known. By using such a DMA transfer method, compared with a case in which a data passes through the CPU, the data transfer can be conducted at a high speed.

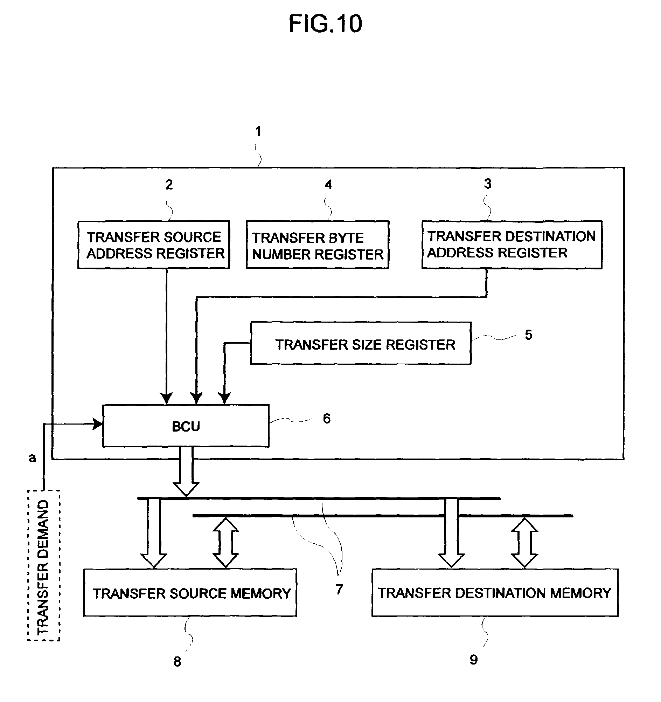

Fig. 10 is a block diagram showing a schematic arrangement of a DMA control apparatus for conducting a conventional DMA transfer. As shown in Fig. 10, a DMA control apparatus 1 has a transfer source address register 2 for holding a transfer source address, a transfer destination address register 3 for holding a transfer destination address, a transfer byte number register 4 for holding an entire transfer byte number, a transfer size register 5 for indicating transfer size for one time, and a bus cycle generator (BCU) 6. The bus cycle generator 6 is connected to a transfer source memory 8 and a transfer destination memory 9 through a bus 7, and generates memory access for the transfer source memory 8 and the transfer destination memory 9.

In this DMA control apparatus 1, when a transfer request signal a in accordance with a transfer demand is input, a data corresponding to a transfer byte number is transferred from the transfer source memory 8 which is designated by the transfer source address register 2 to the transfer destination memory 9 which is designated by the transfer destination address register 3.

However, this data transfer is conducted by means of a transfer byte number for one time corresponding to bus width size during a transfer, which is defined by the transfer size register 5 for indicating a data transfer to be conducted using a bus width corresponding to how many bytes for a bus having a bus width of a plurality of bytes, and in order to transfer a byte number defined by the transfer byte number register 4, data transfers by (total byte numbers to be transferred / a transfer byte number by one time) times are needed.

In other words, the number of times of the data transfers certainly occurs by the number obtained by dividing a value indicated by the transfer byte number register 4 by the transfer size register 5. This is because transfer size for one time is designated by the transfer size register 5, and in case that a transfer source address A is 0000001F and transfer size S is 257 bytes for example, if an alignment for reading a DRAM (Dynamic Random Access Memory) is assumed, it becomes to be possible to set only one byte for the transfer size S even though the bus width has a plurality of bytes. Because, in a bus system in which a lowest digit address is transferred from an even address, it is known for a skilled person in the art that a transfer size number must be n power of two, and there is only one byte for the maximum transfer size number capable of transferring 257 bytes which is a transfer byte number.

As a result, the transfer is conducted in accordance with a procedure below: 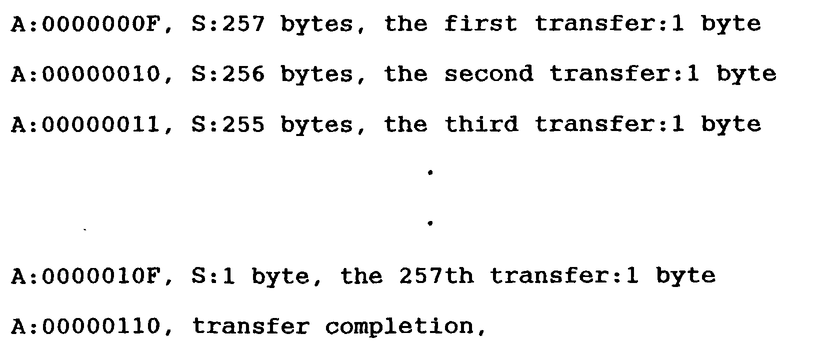 and a total of 257 data transfers corresponding to the number of the transfer size S becomes to be needed.

Although, as an example showing such a DMA transfer method, there is a data alignment system in a DMA transfer, which is disclosed in JP-A-67035/1993, even in this case, taking time cannot be avoided since the transfer is conducted by means of CPU control.

### SUMMARY OF THE INVENTION

The objective of the present invention is to provide DMA control method and apparatus capable of reducing the number of times of a data transfer and shortening transfer time when a data of an arbitrary byte number is transferred by means of a DMA transfer.

To accomplish the above-described objective, a DMA control method in accordance with the present invention, in which, when a data is transferred on a bus having a plurality of byte bus widths using a bus width of more than or equal to two bytes, a bus system for transferring a lowest digit address from an even address is connected, is characterized in that optimum transfer byte size which is a bus width during a data transfer on a bus is obtained every data transfer, based on address regions and transfer byte numbers of a transfer source and a transfer destination.

By having the above-described arrangement, when the bus system for transferring a lowest digit address from an even address is connected, and a data is transferred on the bus having a plurality of byte bus widths using a bus width of more than or equal to two bytes, optimum transfer byte size which is a bus width during a data transfer on a bus can be obtained for each one data transfer, based on address regions and transfer byte numbers of a transfer source and a transfer destination. Accordingly, it is possible to reduce the number of times of a data transfer and shorten transfer time when a data of an arbitrary byte number is transferred by means of a DMA transfer.

The objective of the present invention is achieved by a DMA control apparatus which is connected to a bus system for transferring a lowest digit address from an even address when a data is transferred on a bus having a plurality of byte bus widths using a bus width of more than or equal to two bytes, said DMA control apparatus comprising transfer size determining means for, every data transfer, obtaining optimum transfer byte size which is a bus width during a data transfer on a bus, based on address regions and transfer byte numbers of a transfer source and a transfer destination.

Also, by means of a DMA control apparatus in accordance with the present invention, the above-mentioned DMA control method can be realized.

### BRIEF DESCRIPTION OF THE INVENTION

This and other objects, features, and advantages of the present invention will become more apparent upon a reading of the following detailed description and drawings, in which:
Fig. 1 is a block diagram showing a schematic arrangement of a DMA control apparatus in relation to the first embodiment of the present invention;
Fig. 2A and 2B show address alignment byte determining device of Fig. 1, and 2A is a circuit diagram of a former part and 2B is a circuit diagram of a latter part;
Fig. 3A and 3B show alignment byte number determining device of Fig. 1, and 3A is a circuit diagram of a former part and 3B is a circuit diagram of a latter part;
Fig. 4 is a circuit diagram of an alignment byte number integrator of Fig. 1;
Fig. 5 is a circuit diagram of a minimum alignment byte generator of Fig. 1;
Fig. 6 is a flowchart showing a procedure of data writing to transfer destination in the DMA control apparatus of Fig. 1;
Fig. 7 is a block diagram showing a schematic arrangement of a DMA control apparatus in relation to the second embodiment of the present invention;
Fig. 8 is a flowchart showing a procedure of data writing to a transfer destination in the DMA control apparatus of Fig. 7;
Fig. 9 is a block diagram showing a schematic arrangement of a DMA control apparatus in relation to the third embodiment of the present invention;
Fig. 10 is a block diagram showing a schematic arrangement of a DMA control apparatus for conducting a conventional DMA transfer.

### DESCRIPTION OF THE EMBODIMENTS

Embodiments of the present invention will be explained below by referring to drawings.

### [First embodiment]

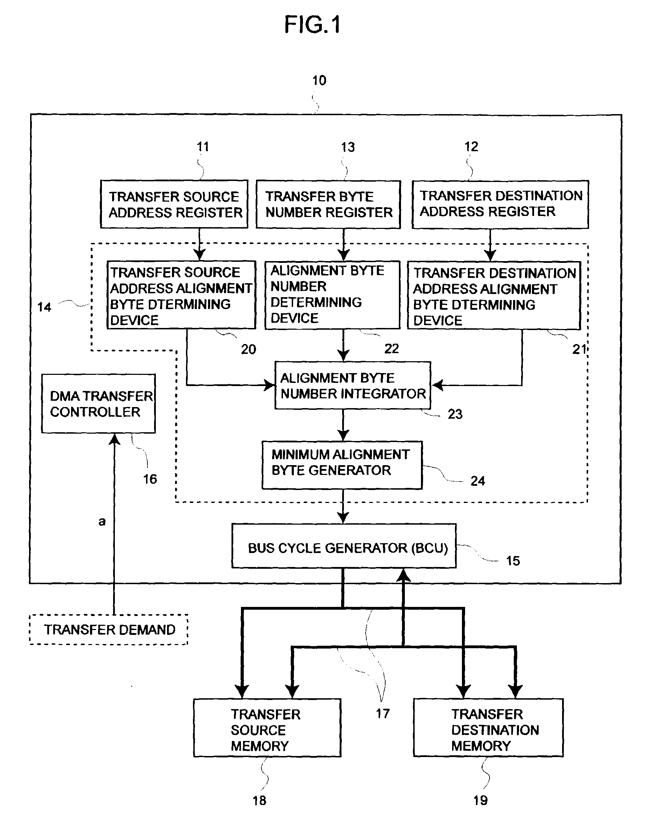

Fig. 1 is a block diagram showing a schematic arrangement of a DMA control apparatus in relation to the first embodiment of the present invention. As shown in Fig. 1, a DMA control apparatus 10 has a transfer source address register 11 for holding a transfer source address, a transfer destination address register 12 for holding a transfer destination address, a transfer byte number register 13 for holding an entire transfer byte number, a transfer size determining means 14, a bus cycle generator (BCU) 15, and a DMA transfer controller 16. The bus cycle generator 15 is connected to a transfer source memory 18 and a transfer destination memory 19 through a bus 17 of a 64 byte width.

During a DMA transfer by means of the DMA control apparatus 10, the transfer size determining means 14 calculates transfer byte size which is transferred by means of one data transfer every time it is transferred, and evaluates and determines the transfer byte size. The bus cycle generator 15 generates memory access for the transfer source memory 18 which is indicated by the transfer source address register 11 and the transfer destination memory 19 which is indicated by the transfer destination address register 12. The DMA transfer controller 16 indicates execution of a DMA transfer by means of the DMA control apparatus 10 in accordance with an input of a transfer request signal a based on a transfer demand.

The transfer size determining means 14 has a transfer source address alignment byte determining device 20, a transfer destination address alignment byte determining device 21, an alignment byte number determining device 22, an alignment byte number integrator 23, and a minimum alignment byte generator 24.

The transfer source address register 11 is connected to the transfer source address alignment byte determining device 20, and the transfer destination address register 12 is connected to the transfer destination address alignment byte determining device 21. The transfer byte number register 13 is connected to the alignment byte number determining device 22.

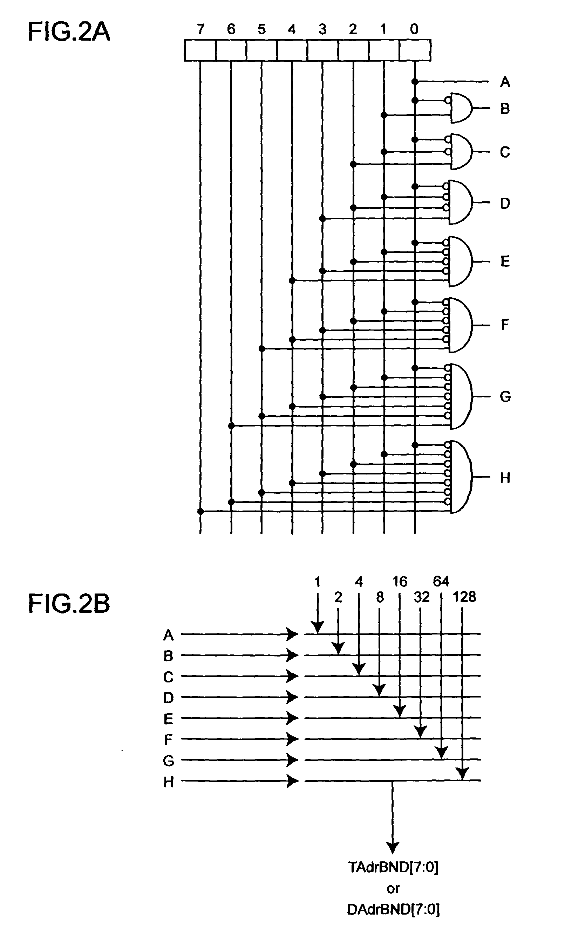

Fig. 2A and 2B show the transfer source and transfer destination address alignment byte determining devices 20 and 21 of Fig. 1, and 2A is a circuit diagram of a former part and 2B is a circuit diagram of a latter part. As shown in Fig. 2A and 2B, the transfer source address alignment byte determining device 20 and the transfer destination address alignment byte determining device 21 have the same arrangement, and are divided into two parts of a former part and a latter part. By means of these address alignment byte determining devices 20 and 21, a maximum alignment boundary that an input address satisfies is found.

The former part (Refer to 2A.) is a circuit for decoding that an input address is an address for which how many bytes are aligned along the boundary. Here, it constitutes a lead-one-detector for determining a position where one is first found out of an LSB (least significant bit: lowest digit of a bit line).

The latter part (Refer to 2B.) is a circuit for replacing an aligned n byte boundary with a code represented by a weighted bit position, for example for replacing a decimal digit shown in Fig. 2B with a value of a binary digit, and outputs an address alignment byte number that is alignment information of a transfer source address, and TAdrBND[7:0] or DAdrBND[7:0].

In other words, the transfer byte number register 13 is a register in which a byte number (257 bits) to be transferred is stored, and looks into the maximum number by which the transfer can be conducted out of this transfer byte number through a decoder of the former part. And, it is possible to transfer more than or equal to one byte at maximum if it is A, more than or equal to two bytes at maximum if it is B, more than or equal to four bytes at maximum if it is C, more than or equal to eight bytes at maximum if it is D, more than or equal to sixteen bytes at maximum if it is E, more than or equal to thirty two bytes at maximum if it is F, more than or equal to sixty four bytes at maximum if it is G, and more than or equal to one hundred twenty eight bytes at maximum if it is H, respectively.

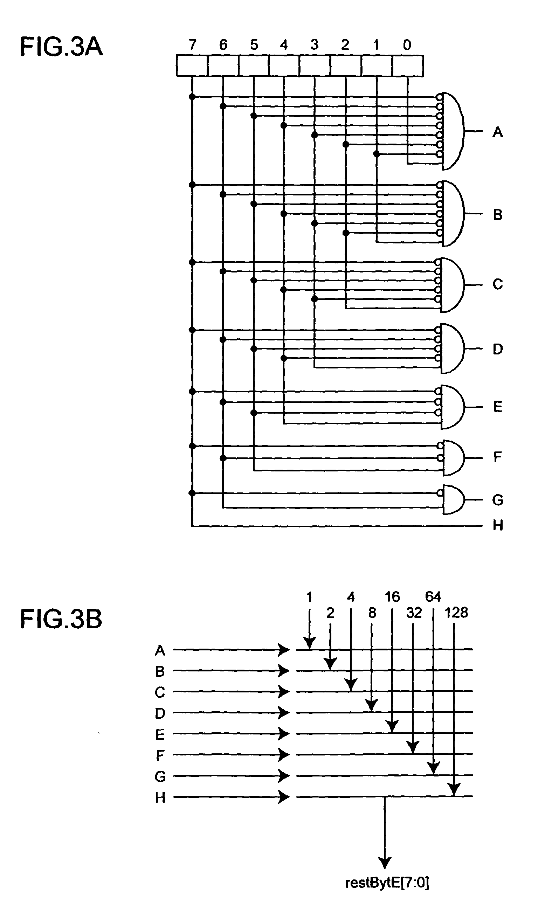

Fig. 3A and 3B show the alignment byte number determining device 22 of Fig. 1, and 3A is a circuit diagram of a former part and 3B is a circuit diagram of a latter part. As shown in Fig. 3A and 3B, the alignment byte number determining device 22 is divided into two parts of a former part and a latter part, and calculates the maximum byte number of n power of two, which does not exceed an input byte number.

The former part (Refer to 3A is a circuit for determining what value of n power of two is included in the input byte number. Here, it constitutes a lead-one-detector for determining a position where one is first found out of an MSB (most significant bit: highest digit of a bit line).

The latter part (Refer to 3B is a circuit for replacing this value of n power of two with a code represented by a weighted bit position, and outputs a maximum alignment byte number that satisfies a transfer byte number, and restBytE[7:0].

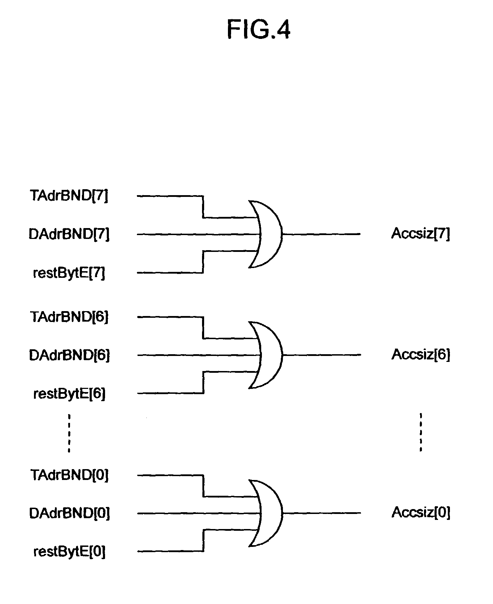

Fig. 4 is a circuit diagram of the alignment byte number integrator 23 of Fig. 1. As shown in Fig. 4, the alignment byte number integrator 23 is consisted of OR circuits, and here, does a logical sum (OR operation) of the respective weighted codes input from both address alignment byte determining devices 20 and 21 and the alignment byte number determining device 22, and combines alignment information with each other to form one information.

As a result, by means of inputs of TAdrBND[7] and DAdrBND[7] that are address alignment byte numbers of a transfer source address, and restBytE[7] that is a maximum alignment byte number which satisfies a transfer byte number, Accsiz[7] that is integrated alignment information is output. In the same manner, integrated alignment information, Accsiz[6], ··· , Accsiz[0] are output. In addition, each weighted code is information coded by both address alignment byte determining devices 20 and 21 and the alignment byte number determining device 22.

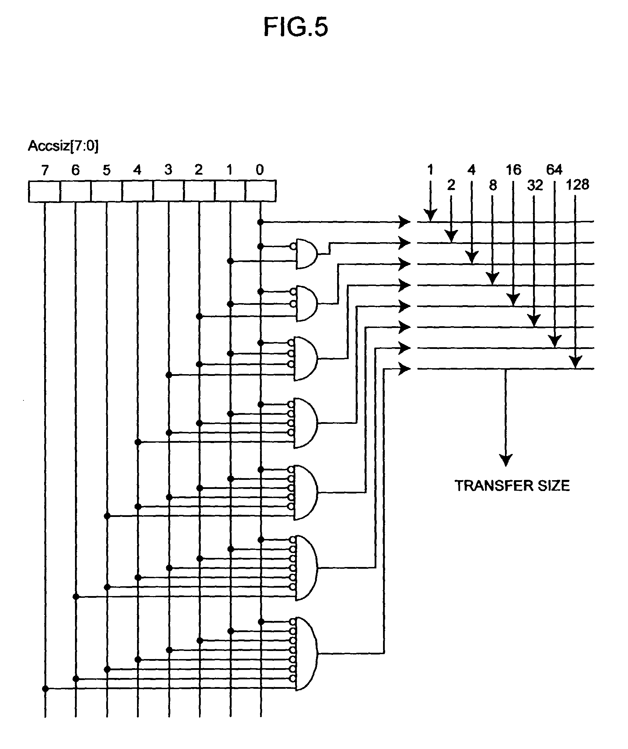

Fig. 5 is a circuit diagram of the minimum alignment byte generator of Fig. 1. The minimum alignment byte generator 24 is divided into two parts of a former part and a latter part, and generates a minimum alignment byte in accordance with an input of alignment byte number integrated information from the alignment byte number integrator 23. As a result of this, transfer byte size is determined.

The former part is a circuit for taking out a minimum alignment information by finding a place where one first appears out of an LSB of alignment information that has been input. The latter part is a circuit for replacing this minimum alignment information with a code represented by a weighted bit position, and converts it into a byte number and outputs it as transfer size.

Accordingly, by means of the transfer size determining means 14, optimum transfer byte size can be obtained through a first process for finding a maximum alignment boundary which an input address satisfies, and coding it for a transfer source address and a transfer destination address to be input, a second process for calculating the maximum byte number of n power of two, which does not exceed the input number of transferred bytes, and coding it, a third process for doing a logical sum of information coded by the above-described first and second processes, and integrating alignment information, and a fourth process for taking minimum alignment information out of the alignment information integrated by the above-described third process, and converting it into a byte number.

When an output from this minimum alignment byte generator 24 is input to the bus cycle generator 15, the bus cycle generator 15 conducts data reading from a transfer source and data writing to a transfer destination in accordance with a byte number based on the input transfer byte size.

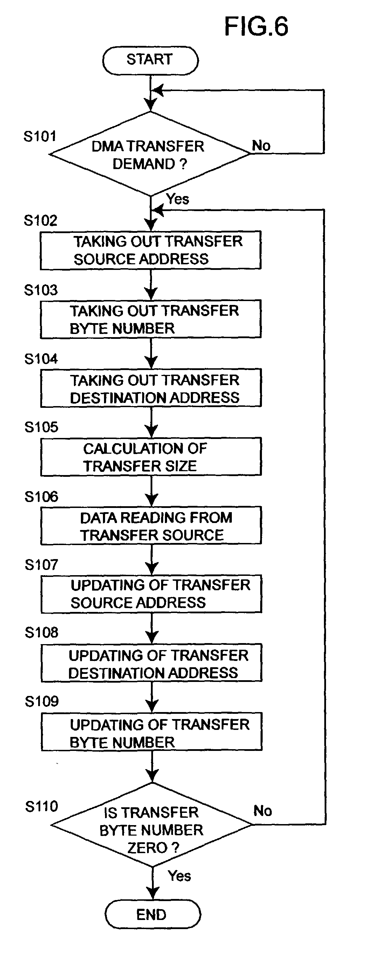

Fig. 6 is a flowchart showing a procedure of data writing to transfer destination in the DMA control apparatus of Fig. 1. As shown in Fig. 6, first, it is determined whether or not there is a demand of a DMA transfer (step S101), and if the demand does not exist (No), the determination is continued. When this determination is conducted, by means of a control command of a CPU, a transfer source address, a transfer destination address and a transfer byte number are already set in each corresponding register of the DMA control apparatus 10, respectively.

Next, if the demand of the DMA transfer exists (Yes), the CPU indicates a start of the DMA transfer to the DMA control apparatus 10, and the transfer source address is taken out in the DMA control apparatus (step S102). In succession after taking out this transfer source address, the transfer byte number is taken out (step S103), and further, the transfer destination address is taken out (step S104), and transfer size is calculated from these transfer source address, transfer byte number and transfer destination address (step S105).

Next, the DMA control apparatus 10 reads a data corresponding to the transfer size from the transfer source address, based on the obtained transfer size, and writes the data corresponding to the read transfer size in the transfer destination address (step S106).

By conducting the reading and writing of the data corresponding to this transfer size, updating of the transfer source address (step S107), updating of the transfer destination address (step S108) and updating of the transfer byte number (step S109) are conducted.

Thereafter, it is determined whether or not the transfer byte number is zero (step S110), and if the transfer byte number is not zero (No), the procedure returns to the step S102 and the transfer source address is taken out, and the succeeding steps are repeated until the transfer byte number becomes to be zero. If the transfer byte number is zero (Yes), the DMA transfer by means of the DMA control apparatus 10 is completed.

As a result, by an input of a transfer request signal a to the DMA control apparatus 10, a data corresponding to the transfer byte size is transferred from the transfer source memory 18 which is designated by the transfer source address register 11 to the transfer destination memory 19 which is designated by the transfer address destination register 12.

As mentioned above, the DMA control apparatus 10 reads a data corresponding to the transfer size from the transfer source address, based on the obtained transfer size, and writes the data corresponding to the read transfer size in the transfer destination address, and this particular example will be explained below.

When the data transfer is conducted, the number of times of the transfer in one data transfer is calculated every transfer by means of an algorism described below.

Out of 64 bytes in case that the transfer byte number is more than or equal to 64 bytes,
32 bytes in case that the transfer byte number is more than or equal to 32 bytes,
16 bytes in case that the transfer byte number is more than or equal to 16 bytes,
8 bytes in case that the transfer byte number is more than or equal to 8 bytes,
4 bytes in case that the transfer byte number is more than or equal to 4 bytes,
2 bytes in case that the transfer byte number is more than or equal to 2 bytes,
1 byte in case that the transfer byte number is more than or equal to 1 byte,
   and
64 bytes in case that the transfer source address is 64 byte alignment address,
32 bytes in case that the transfer source address is 32 byte alignment address,
16 bytes in case that the transfer source address is 16 byte alignment address,
8 bytes in case that the transfer source address is 8 byte alignment address,
4 bytes in case that the transfer source address is 4 byte alignment address,
2 bytes in case that the transfer source address is 2 byte alignment address,
1 bytes in case that the transfer source address is 1 byte alignment address,
   an address is obtained, which satisfies both and has the largest byte number that initially meets when being counted from below. In other words, a logical sum is made.

As a result, for example, in case that a transfer source address A is 0000000F and transfer size S is 257 bytes, a transfer byte number for each transfer in data transfers conducted a plurality of times is as follows:
A:0000000F, S:257 bytes, the first transfer: 1 byte
A:00000010, S:256 bytes, the second transfer: 16 bytes
A:00000020, S:240 bytes, the third transfer: 32 bytes
A:00000040, S:208 bytes, the fourth transfer: 64 bytes
A:00000080, S:144 bytes, the fifth transfer: 64 bytes
A:000000C0, S: 80 bytes, the sixth transfer: 64 bytes
A:00000100, S: 16 bytes, the seventh transfer: 16 bytes
A:00000110, transfer completion

Accordingly, the transfers are completed seven times in all. In the above-described example, although 64 bytes that is the largest byte number can be transferred at the fourth transfer, a byte number which can be transferred one time is determined by a position where an address is located in a byte alignment.

In this manner, the DMA control apparatus 10 drives optimum transfer byte size which is a bus width during a data transfer on a bus, based on transfer source and transfer destination address regions and transfer byte numbers, and automatically updates transfer size. Accordingly, when a data is transferred on a bus having a plurality of byte bus widths using a bus width of more than or equal to two bytes, a bus system for transferring a lowest digit address from an even address is connected, and a byte number which can be transferred one time is determined by a position where an address is located in a byte alignment, and while conventionally the transfer byte number (for example, 1 byte) is fixed, a maximum transfer byte number that is a maximum value obtained by calculating a byte number that can be transferred for each one transfer can be set as the transfer byte number.

In other words, a maximum alignment byte number is calculated from each byte number of maximum address alignments for a transfer source address and a transfer destination address, and out of transfer byte numbers, and optimum transfer byte size can be obtained.

As a result of this, when a determined arbitrary transfer byte number is transferred, since the number of time of access for the transfer to a transfer source memory indicated by a transfer source address and a transfer destination memory indicated by a transfer destination address can be reduced compared with a prior art, it is possible to reduce the number of times of a data transfer and shorten transfer time.

### [Second embodiment]

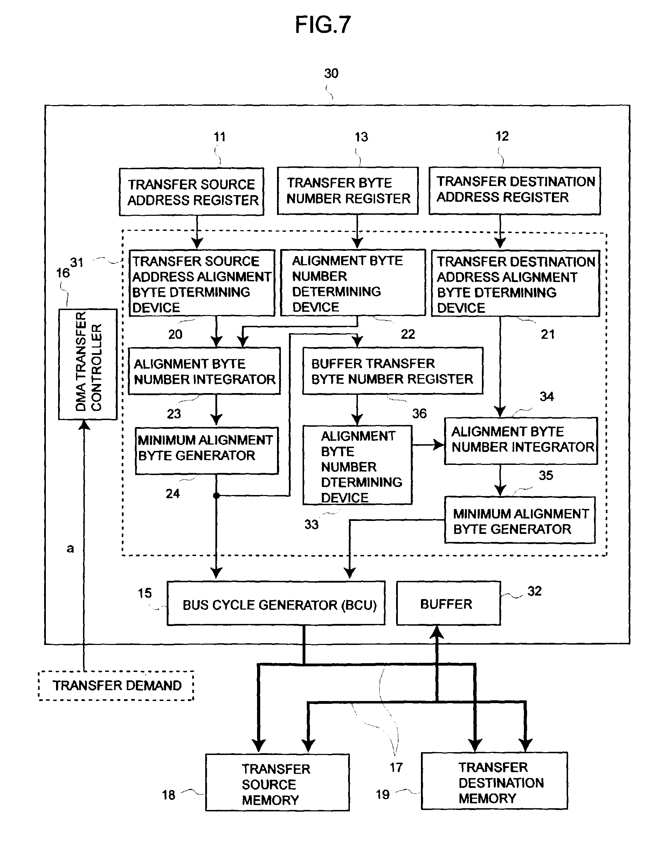

Fig. 7 is a block diagram showing a schematic arrangement of a DMA control apparatus in relation to the second embodiment of the present invention. As shown in Fig. 7, a DMA control apparatus 30 has an arrangement same as the DMA control apparatus 10 except that a transfer size determining means 31 in which each two of the alignment byte number determining device 22, the alignment byte number integrator 23 and the minimum alignment byte generator 24 are equipped, respectively, is provided, each one of which is provided, respectively, in the transfer size determining means 14, and except that a buffer 32 is provided.

In the above-mentioned first embodiment, a transfer is conducted with a byte number having a combination in which address alignments of a transfer source address, a transfer byte number and a transfer destination address coincide with each other. However, in the first embodiment, in case that an address alignment of the transfer source address and an address alignment of the transfer destination address do not at all coincide with each other, only a transfer for each one byte can be conducted, and compared with the case in which the address alignments of the transfer source address and the transfer byte number coincide with each other, it becomes to be condition having more strict restrictions.

Accordingly, in this second embodiment, by providing each two of the address alignment byte determining device, the alignment byte number determining device, the alignment byte number integrator and the minimum alignment byte generator 24, the restrictions of the above-mentioned condition are improved.

The transfer size determining means 31 has a transfer source address alignment byte determining device 20, a transfer destination address alignment byte determining device 21, two alignment byte number determining devices 22 and 33, two alignment byte number integrators 23 and 34, two minimum alignment byte generators 24 and 35, and a buffer transfer byte number register 36.

The transfer source address register 11 is connected to the transfer source address alignment byte determining device 20, and the transfer byte number register 13 is connected to the alignment byte number determining device 22. The transfer source address alignment byte determining device 20 and the alignment byte number determining device 22 are connected to the alignment byte number integrator 23, and the alignment byte number integrator 23 is connected to the minimum alignment byte generator 24 and the minimum alignment byte generator 24 is connected to the bus cycle generator 15 and the buffer transfer byte number register 36, respectively.

The buffer transfer byte number register 36 is connected to the alignment byte number determining device 33 and the alignment byte number determining device 33 is connected to the alignment byte number integrator 34, respectively, and the alignment byte number integrator 34 is connected to the minimum alignment byte generator 35 and the minimum alignment byte generator 35 is connected to the bus cycle generator 15, respectively.

Operation from the transfer source address register 11 to the bus cycle generator 15 is the same as that in the first embodiment other than a change of an input number of the alignment byte number integrator 23, and the bus cycle generator 15 conducts a transfer from the transfer source memory 18 by a byte number indicated by the minimum alignment byte generator 24. In this second embodiment, the transfer from the transfer source memory 18 is conducted to the buffer 32 inside the DMA control apparatus 30. The number of the transfer to the buffer 32 is stored in the buffer transfer byte number register 36, and an output from the buffer transfer byte number register 36 is input to the alignment byte number determining device 33.

A transfer destination address of the transfer destination address register 12 is input to the transfer destination address alignment byte determining device 21, and an output from the transfer destination address alignment byte determining device 21 and an output from the alignment byte number determining device 33 are integrated by the alignment byte number integrator 34. An output from the alignment byte number integrator 34 is input to the minimum alignment byte generator 35, and a transfer byte number that is an output from the minimum alignment byte generator 35 is transferred from the buffer 32 to the transfer destination memory 19.

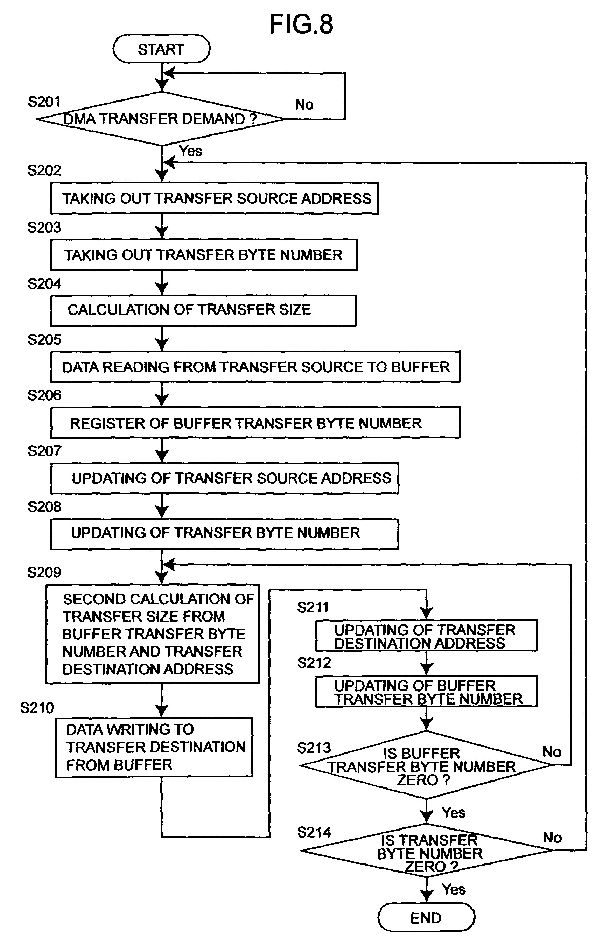

Fig. 8 is a flowchart showing a procedure of data writing to a transfer destination in the DMA control apparatus of Fig. 7. As shown in Fig. 8, first, it is determined whether or not there is a demand of a DMA transfer (step S201), and if the demand does not exist (No), the determination is continued. When this determination is conducted, by means of a control command of a CPU, a transfer source address, a transfer destination address and a transfer byte number are already set in each corresponding register of the DMA control apparatus 30, respectively.

Next, if the demand of the DMA transfer exists (Yes), the CPU indicates a start of the DMA transfer to the DMA control apparatus 10, and the transfer source address is taken out in the DMA control apparatus (step S202). In succession after taking out this transfer source address, the transfer byte number is taken out (step S203), and transfer size is calculated from the transfer source address and the transfer byte number (step S204).

Next, the DMA control apparatus 30 conducts data reading from the transfer source address to the buffer 32, based on the obtained transfer size (step S205), and a transfer size number (a byte number which will be read inside the buffer in future) on which this data reading has been conducted is registered as a buffer transfer byte number (step S206). In this manner, the transfer size number calculated from the transfer source address and the transfer byte number is set as a transfer byte number, and a calculation together with the transfer source address goes ahead. After the registration of the buffer transfer byte number, the transfer source address is updated (step S207), and further, the transfer byte number is updated (step S208).

Next, based on the registered buffer transfer byte number, and the transfer destination address taken out from the transfer destination address register 12, second transfer size is calculated (step S209). Based on this second transfer size, data writing from the buffer 23 to the transfer destination memory 19 is conducted (step S210). After the data writing to the transfer destination memory 19, the transfer destination address is updated (step S211), and further, the buffer transfer byte number is updated (step S212).

Thereafter, it is determined whether or not the buffer transfer byte number is zero (step S213), and if the transfer byte number is not zero (No), the procedure returns to the step S209 and a calculation of the second transfer size is conducted, and the succeeding steps are repeated until the transfer byte number becomes to be zero. If the transfer byte number is zero (Yes), it is determined whether or not the transfer byte number is zero (step S214), and if the transfer byte number is not zero (No), the procedure returns to the step S202 and the transfer source address is taken out, and the succeeding steps are repeated until the transfer byte number becomes to be zero. If the transfer byte number is zero (Yes), the DMA transfer by means of the DMA control apparatus 30 is completed.

In this manner, by dividing the processing associated with the determination of the alignment byte number into two of the transfer source address and the transfer byte number, and the transfer destination address and the buffer transfer byte number, an efficient transfer with a larger alignment byte number can be realized.

Of course, also by means of an arrangement in which the transfer source address register 11 is connected to the transfer destination address alignment byte number determining device 21 and the transfer destination address register 12 is connected to the transfer source address alignment byte number determining device 20, it is possible to accomplish the same objective. In this case, it becomes to be possible to conduct reading a plurality of times with a transfer byte number that is an output result from the minimum alignment byte generator 35, and to finally store a data of a transfer byte number from the transfer source memory 18 in the buffer 32, which is generated by the minimum alignment byte generator 24, and thereafter, to collectively transfer a data of a transfer byte number from the buffer 32 to the transfer destination memory 19, which is indicated by the minimum alignment byte generator 24. By means of this, a more efficient transfer can be realized.

### [Third embodiment]

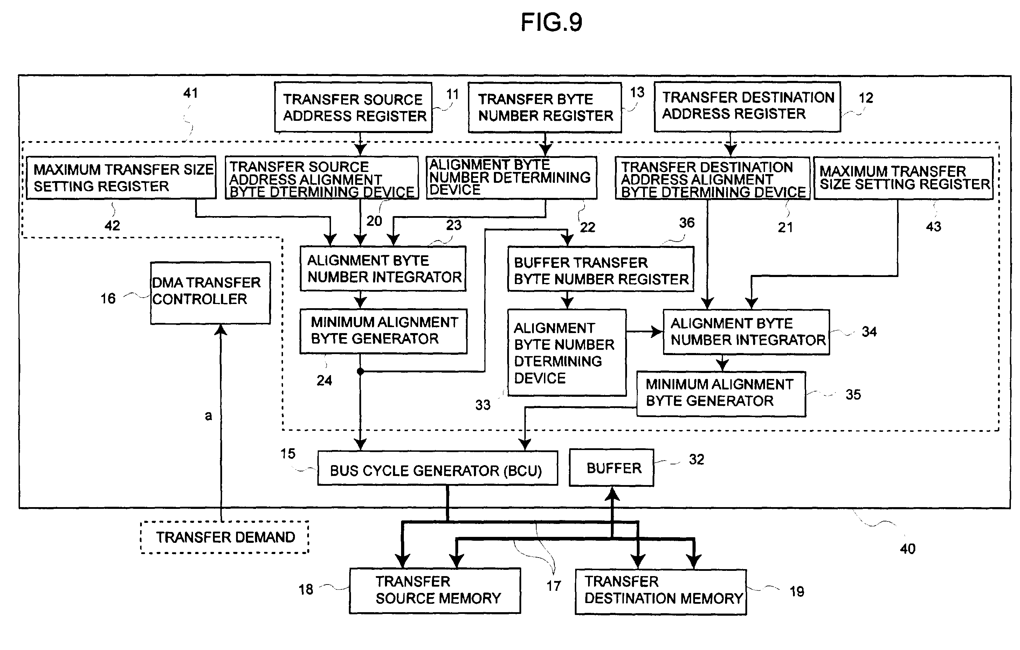

Fig. 9 is a block diagram showing a schematic arrangement of a DMA control apparatus in relation to the third embodiment of the present invention. As shown in Fig. 9, a DMA control apparatus 40 has an arrangement same as the DMA control apparatus 30 except that a transfer size determining means 41 is provided instead of the transfer size determining means 31 shown in the second embodiment.

The transfer size determining means 41 is formed by adding two maximum transfer size setting registers 42 and 43 to the transfer size determining means 31, and one maximum transfer size setting register 42 is connected to the alignment byte number integrator 23 and the other maximum transfer size setting register 43 is connected to the alignment byte number integrator 34, respectively.

In a bus system which is handled by means of a DMA transfer, depending upon an arrangement of the transfer source memory 18 and the transfer destination memory 19, infinite transfer size cannot be always realized, and there are limitations of transfer size which can be continuously transferred, respectively, for the transfer source memory 18 and the transfer destination memory 19.

In this third embodiment, it is possible to provide restrictions of maximum transfer size for transfer source reading operation and transfer destination writing operation, respectively. By that, in case that transfer size calculated from an address alignment and a transfer byte number of the transfer source memory 18 is greater than transfer size designated by the maximum transfer size setting registers 42 and 43, the transfer source reading operation and the transfer destination writing operation can be conducted with a value designated by the maximum transfer size setting registers 42 and 43.

In this manner, according to the DMA control apparatus in relation to the present invention, by means of an input of the transfer request signal a associated with the transfer demand, a data corresponding to a transfer byte number is transferred from the transfer source memory 18 designated by the transfer source address register 11 to the transfer destination memory 19 designated by the transfer destination address register 12. This transfer is conducted by dividing it into a plurality of times, and in case of dividing it into that plurality of times, transfer size is calculated by the transfer size determining means 14, 31 or 41 for each one transfer, and a data transfer is conducted with the calculated transfer size. In case of dividing it into a plurality of times, it is possible to always conduct a transfer with maximum transfer size that does not exceed an upper limit of size, at which reading and writing can be collectively conducted, respectively, for each transfer destination memory and transfer source memory.

In addition, in recent years, since it is a standard type that the transfer source address and the transfer destination address are held in a memory such as a DRAM to which high speed access can be conducted by burst access, if, by means of a transfer method by the above-mentioned DMA control apparatus 10, 30 or 40, a transfer of which transfer byte number is large is conducted by the burst access, not only the number of times of a transfer can be reduced, but also transfer time which is spent for one transfer can be shorten.

As explained above, according to the present invention, since, when the bus system for transferring a lowest digit address from an even address is connected and a data is transferred on the bus having a plurality of byte bus widths using a bus width of more than or equal to two bytes, optimum transfer byte size which is a bus width during a data transfer can be obtained for each one data transfer, based on address regions and transfer byte numbers of a transfer source and a transfer destination, it is possible to reduce the number of times of a data transfer and shorten transfer time when a data of an arbitrary byte number is transferred by means of a DMA transfer.

Also, by means of the DMA control apparatus in accordance with the present invention, the above-mentioned DMA control method can be realized.

The entire disclosure of Japanese Patent Application No. 10-306562 October 28, 1998 including specification, claims, drawing and summary are incorporated herein by reference in its entirely.

## Claims

1. A DMA control method in which, when a data is transferred on a bus having a plurality of byte bus widths using a bus width of more than or equal to two bytes, a bus system for transferring a lowest digit address from an even address is connected,
characterized in that optimum transfer byte size which is a bus width during a data transfer on a bus is obtained every data transfer, based on address regions and transfer byte numbers of a transfer source and a transfer destination.

2. A DMA control method according to claim 1, characterized in that said optimum transfer byte size is obtained by calculating the number of each byte of maximum address alignments for a transfer source address and a transfer destination address, and a maximum alignment byte number out of the number of transferred bytes.

3. A DMA control method according to claim 1, characterized in that said optimum transfer byte size is obtained through:
a first process for finding a maximum alignment boundary which an input address satisfies, and coding it for a transfer source address and a transfer destination address to be input;
a second process for calculating the maximum byte number of n power of two, which does not exceed the input number of transferred bytes, and coding it;
a third process for doing a logical sum of information coded by said first and second processes, and integrating alignment information; and
a fourth process for taking minimum alignment information out of the alignment information integrated by said third process, and converting it into a byte number.

4. A DMA control apparatus which is connected to a bus system for transferring a lowest digit address from an even address when a data is transferred on a bus having a plurality of byte bus widths using a bus width of more than or equal to two bytes,
said DMA control apparatus comprising transfer size determining means for, every data transfer, obtaining optimum transfer byte size which is a bus width during a data transfer on a bus, based on address regions and transfer byte numbers of a transfer source and a transfer destination.

5. A DMA control apparatus according to claim 4, further comprising:
a transfer source address register for outputting transfer source address information to said transfer size determining means;
a transfer destination address register for outputting transfer destination address information to said transfer size determining means;
a transfer byte number register for outputting transfer byte number information to said transfer size determining means;
bus cycle generating means for generating memory access based on output information from said transfer size determining means; and
DMA transfer controlling means for indicating execution of a DMA transfer by means of input of a transfer request signal based on a transfer demand.

6. A DMA control apparatus according to claim 4 or claim 5, said transfer size determining means comprising means for obtaing said optimum transfer byte size by calculating the number of each byte of maximum address alignments for a transfer source address and a transfer destination address, and a maximum alignment byte number out of the number of transferred bytes.

7. A DMA control apparatus according to claim 4, said transfer size determining means comprises meams for calculating the number of bytes transferred from a buffer to a memory indicated by a transfer destination address, based on the number of bytes which have been transferred to the transfer destination address and the buffer.

8. A DMA control apparatus according to claim 4, said transfer size determining means comprisies:
transfer source address alignment byte determining means for finding a maximum alignment boundary which an input transfer source address satisfies, and replacing it with a weighted bit location code;
transfer destination address alignment byte determining means for finding a maximum alignment boundary which an input transfer destination address satisfies, and replacing it with a weighted bit location code;
alignment byte number determining means for calculating the maximum byte number of n power of two, which does not exceed the input number of transferred bytes, and replacing it with a weighted bit location code;
alignment byte number integrating means for doing a logical sum of information output from said transfer source address alignment byte determining means, said transfer destination address alignment byte determining means and said alignment byte number determining means, respectively, and integrating alignment information; and
minimum alignment byte generating means for taking minimum alignment information out of the alignment information integrated by said alignment byte number integrating means, and converting it into a byte number.

9. A DMA control apparatus according to claim 8, further comprising
each two of said alignment byte number integrating means, said alignment byte number determining means and said minimum alignment byte generating means are equipped,
first alignment byte number integrating means for doing a logical sum of information output respectively from first alignment byte number determining means to which the number of transferred bytes is input, and said transfer source address alignment byte determining means;
first minimum alignment byte generating means for taking minimum alignment information out of alignment information integrated by said first alignment byte number integrating means;
second alignment byte number determining means to which a transfer destination address of a buffer transfer byte number based on output information from said first minimum alignment byte generating means;
second alignment byte number integrating means for doing a logical sum of information output from said second alignment byte number determining means and said transfer destination address alignment byte determining means, respectively; and
second minimum alignment byte generating means for taking minimum alignment information out of alignment information integrated by said second alignment byte number integrating means.

10. A DMA control apparatus according to claim 9, further comprising:
first maximum transfer byte number setting means for setting a maximum transfer byte number in said first alignment byte number integrating means; and
second maximum transfer byte number setting means for setting a maximum transfer byte number in said second alignment byte number integrating means.
